# EUROPÄISCHE PATENTANMELDUNG

(11) **EP 1 239 265 A2**
(43) Veröffentlichungstag der Anmeldung: **11.09.2002**
(21) Anmeldenummer: 01107547.0
(22) Anmeldetag: 26.03.2001
(51) Int. Cl.: G01C 21/20, G09B 29/10

(54) **System und Verfahren zur Darstellung von geographischen Abbildungen**

(30) Priorität: 08.03.2001 EP 01105779
(71) Anmelder: Siemens Schweiz AG, 8047 Zürich (CH)
(72) Erfinder: Marty, Felix, 8832 Wollerau (CH); Sigg, Urs, 8006 Zürich (CH)
(74) Vertreter: Berg, Peter

(57) **Zusammenfassung**

Der Erfindung liegt die Aufgabe zugrunde, ein System und Verfahren zur Darstellung von geographischen Abbildungen anzugeben, die es erlauben, einem Benutzer des Kommunikationsgeräts an einem beliebigen Standort landschaftsrelevanten Informationen zu liefern.

Diese Aufgabe wird erfindungsgemäss dadurch gelöst, dass das System zur Darstellung von geographischen Abbildungen ein (mobiles) Kommunikationsgerät umfasst, welches (ein Ortserkennungsmodul und) eine Anzeigeeinheit (LD) aufweist, wobei
a) mittels des Ortserkennungsmoduls der Aufenthaltsort (AO) des mobilen Kommunikationsgeräts feststellbar ist;
b) mittels der Anzeigeeinheit (LD) ein Umgebungsplan (UP) des Aufenthaltsorts (AO) anzeigbar ist,
c) in der Anzeigeeinheit (LD) eine polygonartige Linie (WS), insbesondere auch eine Kette von mindestens zwei miteinander verbundenen diskreten Punkten, auf dem Umgebungsplan (UP) auswählbar ist, und
d) anhand der polygonartigen Linie (WS) unter Zugriff auf geographische Daten in der Anzeigeeinheit (LD) ein entlang der polygonartigen Linie (WS) verlaufendes Höhenprofil (HP) anzeigbar ist und/oder Aussichtsbilder an bestimmten entlang der polygonartigen Linie (WS) gelegenen Punkten darstellbar sind.

Auf diese Weise lassen sich die für eine beispielweise in den Bergen unterwegs befindliche Person wichtigen Informationen über das Höhenprofil eines ausgewählten Weges und die entlang eines ausgewählten Weges gelegenen Aussichten darstellen. Anhand dieser Informationen ist es der Person darüber hinaus ermöglicht, eine vom Höhenprofil und/oder von den Aussichten abhängige Auswahl der Wegstrecke vorzunehmen.

## Beschreibung

Die Erfindung bezieht sich auf ein System und ein Verfahren zur Darstellung von geographischen Abbildungen mit einem mobilen Kommunikationsgerät, welches ein Ortserkennungsmodul und eine Anzeigeeinheit aufweist. Weiter bezieht sich die Erfindung auf ein System und ein Verfahren zur Darstellung von geographischen Abbildungen mit einem Kommunikationsgerät, das eine Bedienoberfläche mit Anzeigeeinheit aufweist.

Heutzutage besteht grundsätzlich das Problem, dass eine sich unterwegs befindende Person die weitere Wegstrecke nur anhand des mit den Augen aufnehmbaren Umgebungsbildes und der hierin enthaltenen Weghinweise erkennen/abschätzen kann. Eine Ausnahme stellen hierbei jedoch die zum Beispiel in Automobilen verfügbaren Navigationssysteme dar, die die Person zu einem bestimmten Ziel hinnavigieren.

Problematisch ist jedoch zum einen die räumliche Gebundenheit an das Automobil und zum anderen die Tatsache, dass keinerlei Informationen über den topographischen Verlauf einer beliebigen und nicht unbedingt an eine Strasse gebundenen Wegstrecke erhalten werden können. So machen die derzeit vorhandenen Navigationssysteme keinerlei Sinn für eine im freien Gelände befindliche Person, die sich verirrt hat oder die aufgrund schlechter Sichtverhältnisse einer bei guter Sicht ansonsten leicht verfolgbaren Route nicht sicher folgen kann. Weiter gibt es keinerlei Möglichkeit, sich zu bestimmten entlang der Route verlaufenden Punkten Aussichten anzeigen zu lassen und so beispielsweise Routen nach den Aussichtmöglichkeiten auswählen zu können. Darüberhinaus besteht derzeit keine Möglichkeit, eine derartige Routenplanung mit simulierten Landschaftsbilder im Vorfeld einer Tour vornehmen zu können.

Der Erfindung liegt daher die Aufgabe zugrunde, ein System und Verfahren zur Darstellung von geographischen Abbildungen der eingangs genannten Art anzugeben, die es erlauben, einem Benutzer des Kommunikationsgerät an einem beliebigen Standort aufbereitete landschaftsrelevante Informationen zu liefern.

Diese Aufgabe wird bezüglich des Systems der eingangs genannten Art erfindungsgemäss dadurch gelöst, dass das System zur Darstellung von geographischen Abbildungen ein mobiles Kommunikationsgerät umfasst, welches ein Ortserkennungsmodul und eine Anzeigeeinheit aufweist, wobei
a) mittels des Ortserkennungsmoduls der Aufenthaltsort des mobilen Kommunikationsgeräts feststellbar ist;
b) mittels der Anzeigeeinheit ein Umgebungsplan des Aufenthaltsorts anzeigbar ist,
c) in der Anzeigeeinheit eine polygonartige Linie, insbesondere auch eine Kette von mindestens zwei miteinander verbundenen diskreten Punkten, auf dem Umgebungsplan auswählbar ist, und
d) anhand der polygonartigen Linie unter Zugriff auf geographische Daten in der Anzeigeeinheit ein entlang der Linie verlaufendes Höhenprofil anzeigbar ist und/oder Aussichtsbilder an bestimmten entlang der Linie gelegene Punkten, insbesondere an dem Endpunkt der Linie, darstellbar sind.

Bezüglich des Verfahrens wird die Aufgabe erfindungsgemäss durch die Merkmale des Patentanspruchs 10 gelöst.

Auf diese Weise lassen sich die für eine beispielweise in den Bergen unterwegs befindliche Person wichtigen Informationen über das Höhenprofil eines ausgewählten Weges und die entlang eines ausgewählten Weges gelegenen Aussichten darstellen. Anhand dieser Informationen ist es der Person darüber hinaus ermöglicht, eine vom Höhenprofil und/oder von den Aussichten abhängige Auswahl der Wegstrecke vorzunehmen.

Der Person ist so die Möglichkeit gegeben, mit dem mobilen Kommunikationsendgerät an einem beliebigen Standort das Landschaftsbild zu simulieren. Damit besteht unter anderem die Möglichkeit, von unterwegs mittels der Ortserkennung, beispielsweise mittels Global Positioning System GPS, Lokalisierungen über GSM, GPRS, UMTS, die aktuelle Position auf dem mobilen Endgerät in einer Umgebungskarte (GIS) anzuzeigen und ausgehend davon eine Weg- oder Wanderroute über einen Polygonzug zu definieren. Das System simuliert dann zum Beispiel das Höhenprofil dieses Polygonzuges und zeigt beispielsweise die Aussicht am Endpunkt oder an beliebigen entlang des Polygonzuges verlaufenden Punkten an. So kann von unterwegs aus eine für die Person optimale oder besonders interessante Route und/oder ein interessanter Aussichtspunkt simuliert und angezeigt werden.

Alternative Lösungen der oben genannten Aufgabe ergeben sich hinsichtlich des Systems und des Verfahrens gemäss den Patentansprüchen 19 bzw. 20. Diese Lösungen ermöglichen es, beispielsweise eine Routenplanung bereits von einem beliebigen Ort im voraus vorzunehmen. Die simulierten Höhenprofile und/oder Ansichtsbilder können somit auch ausgedruckt und beispielsweise anderen Mitgliedern einer Tourengruppe zwecks Tourenplanung vorgestellt werden.

Damit das (mobile) Kommunikationsgerät nicht über einen vergleichsweise grossen Speicher verfügen muss, ist es vorgesehen, dass der Umgebungsplan und/oder die geographischen Daten in einem stationären Speicher abgelegt sind. Vergleichbares gilt für die diesbezügliche Rechenleistung, wenn das Höhenprofil und die Aussichtsbilder anhand der geographischen Daten in einem stationären Rechner berechenbar sind.

Eine besonders geeignete Ausgestaltung sieht es daher vor, dass das (mobile) Kommunikationsgerät zeitweise direkt oder über ein Vermittlungsmodul mit dem stationären Speicher und/oder dem stationären Rechner kommuniziert. So übermittelt das Kommunikationsgerät quasi nur die Simulationsanfrage an einen wie auch immer gearteten Server und erhält nachfolgend die berechneten und für die graphische Darstellung aufbereiteten Daten. Für die Darstellung kann basierend aus den GIS-Daten (Geographic Information System) mittels Vektordaten und Höhenmodellen eine optimale 3D-Visualisierung erzielt werden. Derartige 3D-Visualisierungen können zum Beispiel eine 3D-Sicht mit Objekten, wie Gebäuden und dergleichen, oder sogar eine überhöhte 3D-Sicht sein. Der Begriff des Vermittlungsmoduls soll dabei weit gefasst verstanden werden. Als Vermittlungsmodul wird vorliegend jede Art von Vorrichtung verstanden, die in der Lage ist, die Kommunikation zwischen dem benutzerseitigen Kommunikationsgerät und dem stationären Speicher und/oder stationären Rechner zu ermöglichen.

Damit sich eine Person einen Zielort aussuchen kann, der bestimmte gerade aktuell von ihr gewünschte Eigenschaften aufweist, ist es besonders vorteilhaft, wenn der Endpunkt der polygonartigen Linie anhand einer von einem Benutzer vorgebbaren Kategorie auswählbar ist. Als derartige Kategorien sind besonders Schutzhütten, Orte mit Verpflegungs- und/oder Übernachtungsmöglichkeit, Polizeistationen, Bergwachtstationen, Grenzstationen und dergleichen denkbar. Hierbei kann zusätzlich eine Entfernungsobergrenze vom Aufenthaltsort angegeben werden, so dass nur die Zeit- und Kräftemässig noch erreichbaren Zielorte ausgewählt werden können.

Hierbei ist es alternativ oder auch ergänzend von weiterem Vorteil, wenn der Verlauf der polygonartigen Linie zwischen dem Aufenthaltsort und dem Endpunkt der Linie aufgrund einer von einem Benutzer vorgebbaren Wegeigenschaftskategorie, insbesondere Wanderweg, befestigte Strasse, auswählbar ist. Die Person kann so den für sie geeignetesten Weg auswählen.

Diese vorstehend genannten Eigenschaften bedingen natürlich, dass die gespeicherten geographischen Daten ebenfalls dahingehend nach den vorstehend genannten Kriterien selektierbar sind.

Die Person erhält hinsichtlich der Übersichtlichkeit der Darstellung eine besondere Güte, wenn ein Raumwinkel für die Darstellung des Aussichtsbildes vorgebbar ist und/oder wenn ein Massstab des Umgebungsplans vorgebbar ist.

Die Lösung bezüglich des Verfahrens gemäss Patentanspruch 10 sieht ein Verfahren zur Darstellung von geographischen Abbildungen mit einem mobilen Kommunikationsgerät vor, welches ein Ortserkennungsmodul und eine Anzeigeeinheit benutzt, wobei
a) mittels des Ortserkennungsmoduls der Aufenthaltsort des mobilen Kommunikationsgeräts festgestellt wird;
b) mittels der Anzeigeeinheit ein Umgebungsplan des Aufenthaltsorts angezeigt wird,
c) in der Anzeigeeinheit eine polygonartige Linie, insbesondere auch eine Kette von mindestens zwei miteinander verbundenen diskreten Punkten, auf dem Umgebungsplan ausgewählt wird, und
d) anhand der polygonartigen Linie unter Zugriff auf geographische Daten in der Anzeigeeinheit ein entlang der Linie verlaufendes Höhenprofil angezeigt wird und/oder Aussichtsbilder an bestimmten entlang der Linie gelegene Punkten, insbesondere an dem Endpunkt der Linie, dargestellt werden.

Ein besondere Vorteil ergibt sich weiter, wenn ergänzend zu der Orterkennung statt des tatsächlichen Aufenthaltsortes auch ein simulierter Aufenthaltsort vorgegeben werden kann, welcher Ausgangspunkt für den anzuzeigenden Umgebungsplan ist. Somit besteht die Möglichkeit bereits während einer Tour individuell auf Änderungen der Umstände reagieren zu können, indem die geplante verbleibende Tagesroute und/oder eine oder mehrere folgende Tagesrouten besichtigen und bewerten zu können.

Weitere vorteilhafte Ausgestaltungen der Erfindung sind den übrigen Unteransprüchen zu entnehmen.

Ausführungsbeispiele der Erfindung werden nachfolgend anhand der Zeichnung näher erläutert. Dabei zeigen:
- Figur 1: einen Umgebungsplan mit darin eingetragener Wegstrecke und mit einem zur Wegstrecke zugehörigen Höhenprofil;
- Figur 2: eine Simulation einer Umgebung in überhöhter Darstellung entlang der in dem Umgebungsplan gemäss Figur 1 eingetragenen Wegstrecke mit einer Ansicht am Endpunkt der Wegstrecke; und
- Figur 3: eine Simulation der Umgebung von einem einstellbaren Beobachtungspunkt (Aussichtspunkt).

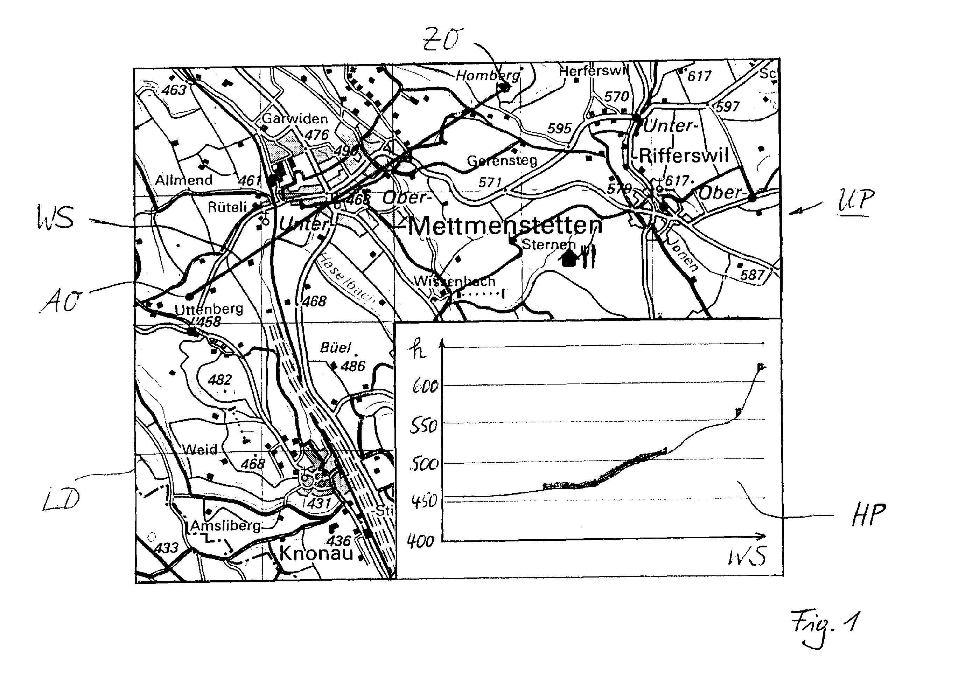

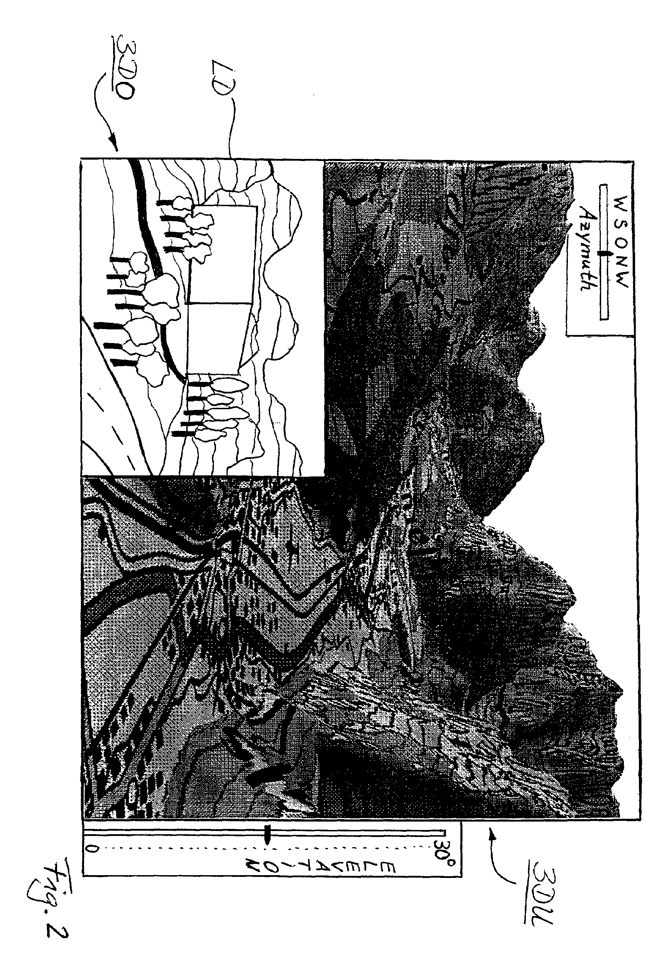

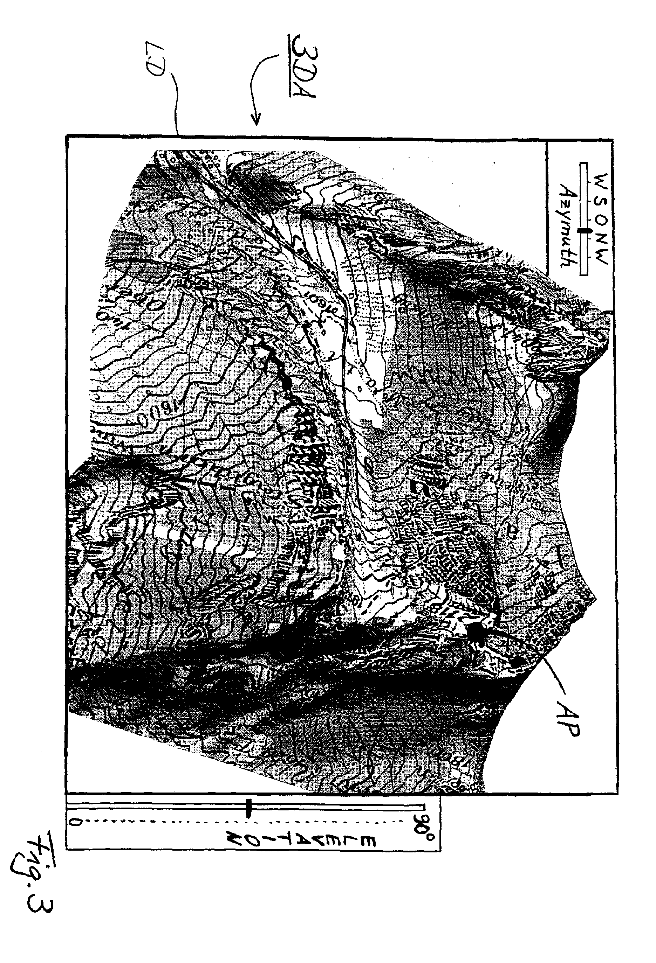

Die Figur 1 zeigt einen Umgebungsplan UP mit darin eingetragener Wegstrecke WS und mit einem zur Wegstrecke WS zugehörigen Höhenprofil HP, wobei der Umgebungsplan UP und das Höhenprofil HP auf einem LCD-Display LD eines hier nicht weiter dargestellten mobilen Kommunikationsgeräts dargestellt sind. Entsprechend zeigt die Figur 2 eine 3D-Simulation einer Umgebung in überhöhter Darstellung 3DU entlang der in dem Umgebungsplan UP eingetragenen Wegstrecke WS mit einer 3D-Ansicht 3DO mit Objekten am Zielort ZO (Endpunkt der Wegstrecke WS). Figur 3 zeigt entsprechend eine 3D-Simulation der Aussicht 3DA an einem beliebigen Aussichtspunkt AP entlang der Wegstrecke WS.

Das hierzu verwendete Kommunikationsgerät mit dem LCD-Display LD kann beispielsweise ein Mobil-Telefon, ein Funkgerät oder ein sonstwie tragbares Terminal mit Anzeigeeinheit LD sein.

Diese vorstehend genannten Darstellungen basieren darauf, dass das Kommunikationsgerät ein Ortserkennungsmodul aufweist und den so ermittelten Aufenthaltsort AO vorliegend an einen Server übermittelt und von diesem den Umgebungsplan UP zu dem ermittelten Aufenthaltsort erhält. Anschliessend kann der Bediener des Kommunikationsgeräts in diesem Umgebungsplan UP die polygonartige Wegstrecke WS einfügen oder sich nach seinen Vorgaben angeben lassen und erhält nachfolgend die simulierten Landschaftsbilder, also vorliegend das Höhenprofil HP, die 3D-Ansicht 3DO, die überhöhte 3D-Sicht 3DU und die 3D-Simulation der Aussicht 3DA, zur Darstellung auf dem LCD-Display LD des Kommunikationsgeräts aufbereitet vom Server zurück.

Im besonderen die 3D-Ansicht 3DO mit Objekten, die überhöhte 3D-Sicht 3DU und die 3D-Simulation der Aussicht 3DA lassen jeweils auf dem Randbereich des LCD-Displays dargestellte Bedienelemente erkennen, mit denen die Überhöhung (elevation) und die Blickrichtung (Azimuth) der jeweiligen Darstellung einstellbar sind.

Auch die Auswahl der Wegstrecke WS nach Wegeigenschaftskriterien und/oder Eigenschaften am Zielort (Zielkriterien) kann durch die Übermittlung der gewünschten Kriterien an den Server und die dort vorgesehene Nachverarbeitung dieser Informationen vorgenommen werden. Die mit den Kriterien übereinstimmende(n) Wegstrecke(n) wi(e)rd(en) dann an das Kommunikationsgerät übermittelt und dort im LCD-Display LD dargestellt. Nachfolgend kann der Bediener des Kommunikationsgerät durch Auswahl einer Wegstrecke WS die Simulation der Landschaftsbilder veranlassen. Hierzu werden die die ausgewählte Wegstrecke WS charakterisierenden Daten an den Server gesendet und dort entsprechend die Simulation durch den Zugriff auf geographische Daten ausgeführt. Die simulierten Landschaftsbilder werden nachfolgend an das Kommunikationsgerät übermittelt und dort wieder im LCD-Display angezeigt.

Zudem ist es auch noch möglich, auf dem Umgebungsplan UP einen virtuellen Aufenthaltsort vorzugeben, welchen dann der Bezugspunkt für den vom Server gelieferten Umgebungsplan UP ist. Auch hierbei besteht dann die Möglichkeit der Auswahl bestimmter Wegstrecken WS und der Anzeige der vorstehend schon erläuterten Geländebilder.

Das vorstehend beschriebene System und das vorstehend beschriebene Verfahren weisen eine Vielzahl von Einsatzgebieten auf. So ist der Einsatz denkbar für das Bauwesen, beispielsweise im Strassenbau und in der Landschaftsplanung, für das Transportwesen (Lieferfirmen, Taxi) für Polizei, Feuerwehr, Militär, Grenzschutz, für die Touristikbranche (Ferienorte) und natürlich für vielfältigste Freizeitanwender wie Skitourengänger, Mountainbiker, Wanderer, Stadtbesucher und dergleichen mehr.

### Bezugszeichenliste

- AO: Aufenthaltsort
- AP: Aussichtspunkt
- HP: Höhenprofil
- LD: LCD-Display
- WS: Wegstrecke
- UP: Umgebungsplan
- ZO: Zielort
- 3DA: 3D-Simulation einer Aussicht
- 3DO: 3D-Ansicht mit Objekten
- 3DU: 3D-Ansicht in überhöhter Darstellung

## Patentansprüche

1. System zur Darstellung von geographischen Abbildungen mit einem mobilen Kommunikationsgerät, welches ein Ortserkennungsmodul und eine Anzeigeeinheit (LD) aufweist, wobei
a) mittels des Ortserkennungsmoduls der Aufenthaltsort (AO) des mobilen Kommunikationsgeräts feststellbar ist;
b) mittels der Anzeigeeinheit (LD) ein Umgebungsplan (UP) des Aufenthaltsorts (AO) anzeigbar ist,
c) in der Anzeigeeinheit (LD) eine polygonartige Linie (WS), insbesondere auch eine Kette von mindestens zwei miteinander verbundenen diskreten Punkten, auf dem Umgebungsplan (UP) auswählbar ist, und
d) anhand der polygonartigen Linie (WS) unter Zugriff auf geographische Daten in der Anzeigeeinheit (LD) ein entlang der polygonartigen Linie (WS) verlaufendes Höhenprofil (HP) anzeigbar ist und/oder Aussichtsbilder (3DA, 3DU, 3DO) an bestimmten entlang der polygonartigen Linie (WS) gelegene Punkten (AP), insbesondere ausgehend vom Aufenthaltsort (AO) in Sicht auf den Endpunkt (ZO) der polygonartigen Linie (WS) und an dem Endpunkt (ZO) der polygonartigen Linie (WS), darstellbar sind.

2. System nach Anspruch 1,
**dadurch gekennzeichnet, dass**
der Umgebungsplan (UP) und/oder die geographischen Daten in einem stationären Speicher abgelegt sind.

3. System nach Anspruch 1 oder 2,
**dadurch gekennzeichnet, dass**
das Höhenprofil (HP) und die Aussichtsbilder (3DA, 3DU, 3DO) anhand der geographischen Daten in einem stationären Rechner berechenbar sind.

4. System nach Anspruch 2 oder 3,
**dadurch gekennzeichnet, dass**
das mobile Kommunikationsgerät zeitweise direkt oder über ein Vermittlungsmodul mit dem stationären Speicher und/oder dem stationären Rechner kommuniziert.

5. System nach einem der Ansprüche 1 bis 4,
**dadurch gekennzeichnet, dass**
der Endpunkt (ZO) oder ein Punkt zwischen den Endpunkten (AO, ZO) der polygonartigen Linie (WS) anhand einer von einem Benutzer vorgebbaren Kategorie , insbesondere Schutzhütte, Ort mit Verpflegungs- und/oder Übernachtungsmöglichkeit, ggfs. mit Entfernungsobergrenze vom Aufenthaltsort (AO), auswählbar ist.

6. System nach einem der Ansprüche 1 bis 5,
**dadurch gekennzeichnet, dass**
der Verlauf der polygonartigen Linie (WS) zwischen dem Aufenthaltsort (AO) und dem Endpunkt (ZO) der polygonartigen Linie (WS) aufgrund einer von einem Benutzer vorgebbaren Wegeigenschaftskategorie, insbesondere Wanderweg, befestigte Strasse, auswählbar ist.

7. System nach einem der Ansprüche 1 bis 6,
**dadurch gekennzeichnet, dass**
ein Raumwinkel für die Darstellung des Aussichtsbildes (3DA, 3DO, 3DU) vorgebbar ist.

8. System nach einem der Ansprüche 1 bis 7,
**dadurch gekennzeichnet, dass**
ein Massstab des Umgebungsplans (UP) vorgebbar ist.

9. System nach einem der Ansprüche 1 bis 8,
**dadurch gekennzeichnet, dass**
ergänzend zu der Orterkennung anstelle des tatsächlichen Aufenthaltsortes (AO) auch ein simulierter Aufenthaltsort vorgebbar ist, welcher Ausgangspunkt für den anzuzeigenden Umgebungsplan (UP) ist.

10. Verfahren zur Darstellung von geographischen Abbildungen mit einem mobilen Kommunikationsgerät, welches ein Ortserkennungsmodul und eine Anzeigeeinheit (LD) aufweist,
wobei
a) mittels des Ortserkennungsmoduls der Aufenthaltsort (AO) des mobilen Kommunikationsgeräts festgestellt wird;
b) mittels der Anzeigeeinheit (LD) ein Umgebungsplan (UP) des Aufenthaltsorts (AO) angezeigt wird,
c) in der Anzeigeeinheit (LD) eine polygonartige Linie (WS), insbesondere auch eine Kette von mindestens zwei miteinander verbundenen diskreten Punkten, auf dem Umgebungsplan (UP) ausgewählt wird, und
d) anhand der polygonartigen Linie (WS) unter Zugriff auf geographische Daten in der Anzeigeeinheit (LD) ein entlang der polygonartigen Linie (WS) verlaufendes Höhenprofil (HP) angezeigt wird und/oder Aussichtsbilder (eDA, 3DO, 3DU) an bestimmten entlang der polygonartigen Linie (WS) gelegenen Punkten, insbesondere ausgehend vom Aufenthaltsort (AO) in Sicht auf den Endpunkt (ZO) der polygonartigen Linie (WS) und an dem Endpunkt (ZO) der polygonartigen Linie (WS), dargestellt werden.

11. Verfahren nach Anspruch 10,
**dadurch gekennzeichnet, dass**
der Umgebungsplan (UP) und/oder die geographischen Daten in einem stationären Speicher gespeichert werden.

12. Verfahren nach Anspruch 10 oder 11,
**dadurch gekennzeichnet, dass**
das Höhenprofil (HP) und die Aussichtsbilder (3DA, 3DO, 3DU) anhand der geographischen Daten in einem stationären Rechner berechnet werden.

13. Verfahren nach Anspruch 11 oder 12,
**dadurch gekennzeichnet, dass**
das mobile Kommunikationsgerät zeitweise direkt oder über ein Vermittlungsmodul mit dem stationären Speicher und/oder dem stationären Rechner kommuniziert.

14. Verfahren nach einem der Ansprüche 10 bis 13,
**dadurch gekennzeichnet, dass**
der Endpunkt (ZO) der polygonartigen Linie (WS) anhand einer von einem Benutzer vorgebbaren Kategorie , insbesondere Schutzhütte, Ort mit Verpflegungs- und/oder Übernachtungsmöglichkeit, ggfs. mit Entfernungsobergrenze vom Aufenthaltsort, ausgewählt wird.

15. Verfahren nach einem der Ansprüche 10 bis 14,
**dadurch gekennzeichnet, dass**
der Verlauf der polygonartigen Linie (WS) zwischen dem Aufenthaltsort (AO) und dem Endpunkt (ZO) der polygonartigen Linie (WS) aufgrund einer von einem Benutzer vorgebbaren Wegeigenschaftskategorie, insbesondere Wanderweg, befestigte Strasse, ausgewählt wird.

16. Verfahren nach einem der Ansprüche 10 bis 15,
**dadurch gekennzeichnet, dass**
ein Raumwinkel für die Darstellung des Aussichtsbildes (3DA, 3DO, 3DU) vorgegeben wird.

17. Verfahren nach einem der Ansprüche 10 bis 16,
**dadurch gekennzeichnet, dass**
ein Massstab des Umgebungsplans (UP) auswählbar vorgegeben wird.

18. Verfahren nach einem der Ansprüche 10 bis 17,
**dadurch gekennzeichnet, dass**
ergänzend zu der Orterkennung anstelle des tatsächlichen Aufenthaltsortes (AO) auch ein simulierter Aufenthaltsort vorgegeben wird, welcher Ausgangspunkt für den anzuzeigenden Umgebungsplan (UP) ist.

19. System zur Darstellung von geographischen Abbildungen mit einem Kommunikationsgerät, welches eine Bedienoberfläche mit Anzeigeeinheit (LD) aufweist,
wobei
a) ein Aufenthaltsort (AO) über die Bedienoberfläche vorgebbar ist;
b) mittels der Anzeigeeinheit (LD) ein Umgebungsplan (UP) des Aufenthaltsorts (AO) anzeigbar ist,
c) in der Anzeigeeinheit (LD) eine polygonartige Linie (WS), insbesondere auch eine Kette von mindestens zwei miteinander verbundenen diskreten Punkten, auf dem Umgebungsplan (UP) auswählbar ist, und
d) anhand der polygonartigen Linie (WS) unter Zugriff auf geographische Daten in der Anzeigeeinheit (LD) ein entlang der polygonartigen Linie verlaufendes Höhenprofil (HP) anzeigbar ist und/oder Aussichtsbilder (3DA, 3DO, 3DU) an bestimmten entlang der Linie gelegene Punkten, insbesondere ), insbesondere ausgehend vom Aufenthaltsort (AO) in Sicht auf den Endpunkt (ZO) der polygonartigen Linie (WS) und an dem Endpunkt (ZO) der polygonartigen Linie (WS), darstellbar sind.

20. Verfahren zur Darstellung von geographischen Abbildungen mit einem Kommunikationsgerät, welches eine Bedienoberfläche mit Anzeigeeinheit (LD) aufweist,
wobei
a) ein Aufenthaltsort (AO) über die Bedienoberfläche vorgegeben wird;
b) mittels der Anzeigeeinheit (LD) ein Umgebungsplan (UP) des Aufenthaltsorts (AO) angezeigt wird,
c) in der Anzeigeeinheit (LD) eine polygonartige Linie (WS), insbesondere auch eine Kette von mindestens zwei miteinander verbundenen diskreten Punkten, auf dem Umgebungsplan (UP) ausgewählt wird, und
d) anhand der polygonartigen Linie (WS) unter Zugriff auf geographische Daten in der Anzeigeeinheit (LD) ein entlang der polygonartigen Linie (WS) verlaufendes Höhenprofil (HP) angezeigt wird und/oder Aussichtsbilder (3DA, 3DO, 3DU) an bestimmten entlang der Linie gelegene Punkten, insbesondere ausgehend vom Aufenthaltsort (AO) in Sicht auf den Endpunkt (ZO) der polygonartigen Linie (WS) und an dem Endpunkt (ZO) der polygonartigen Linie (WS), dargestellt werden.

21. Verfahren nach Anspruch 20,
**dadurch gekennzeichnet, dass**
der Umgebungsplan (UP) und/oder die geographischen Daten in einem stationären Speicher gespeichert werden.

22. Verfahren nach Anspruch 20 oder 21,
**dadurch gekennzeichnet, dass**
das Höhenprofil (HP) und die Aussichtsbilder (3DA, 3DO, 3DU) anhand der geographischen Daten in einem stationären Rechner berechnet werden.

23. Verfahren nach Anspruch 21 oder 22,
**dadurch gekennzeichnet, dass**
das Kommunikationsgerät zeitweise direkt oder über ein Vermittlungsmodul mit dem stationären Speicher und/oder dem stationären Rechner kommuniziert.

24. Verfahren nach einem der Ansprüche 20 bis 23,
**dadurch gekennzeichnet, dass**
der Endpunkt (ZO) der polygonartigen Linie (WS) anhand einer von einem Benutzer vorgebbaren Kategorie , insbesondere Schutzhütte, Ort mit Verpflegungs- und/oder Übernachtungsmöglichkeit, ggfs. mit Entfernungsobergrenze vom Aufenthaltsort, ausgewählt wird.

25. Verfahren nach einem der Ansprüche 20 bis 24,
**dadurch gekennzeichnet, dass**
der Verlauf der polygonartigen Linie (WS) zwischen dem Aufenthaltsort (AO) und dem Endpunkt (ZO) der polygonartigen Linie (WS) aufgrund einer von einem Benutzer vorgebbaren Wegeigenschaftskategorie, insbesondere Wanderweg, befestigte Strasse, ausgewählt wird ist.

26. Verfahren nach einem der Ansprüche 20 bis 25,
**dadurch gekennzeichnet, dass**
ein Raumwinkel für die Darstellung des Aussichtsbildes (3DA, 3DO, 3DU) vorgegeben wird.

27. Verfahren nach einem der Ansprüche 20 bis 26,
**dadurch gekennzeichnet, dass**
ein Massstab des Umgebungsplans (UP) auswählbar vorgegeben wird.
